# FASCICULE DE BREVET EUROPEEN

(11) **EP 4 248 260 B1**
(45) Date de publication et mention de la délivrance du brevet: **21.05.2025**
(21) Numéro de dépôt: 21814777.5
(22) Date de dépôt: 18.11.2021
(51) Int. Cl.: G02B 27/01

(54) **DISPOSITIF D'AFFICHAGE TÊTE HAUTE**
HEAD-UP-ANZEIGEVORRICHTUNG
HEAD-UP DISPLAY DEVICE

(30) Priorité: 19.11.2020 FR 2011887
(43) Date de publication de la demande: 27.09.2023
(73) Titulaire: Eyelights, 31670 Labège (FR)
(72) Inventeur: NAGTEGAELE, Patrice, 31500 TOULOUSE (FR); DUFLOT, Romain, 31500 TOULOUSE (FR)
(74) Mandataire: Lavoix
(86) Numéro de dépôt international: PCT/EP2021/082217
(87) Numéro de publication internationale: WO 2022/106577

(56) Documents cités:
- DE-B1- 2 450 704
- FR-A1- 2 652 936
- FR-A1- 3 079 314

## Description

La présente invention concerne un dispositif d'affichage tête haute. La présente invention concerne aussi un véhicule comprenant un tel dispositif d'affichage tête haute.

Un dispositif d'affichage tête haute comprend de manière classique une source de projection d'informations propre à générer un faisceau lumineux en direction d'un support transparent. Le support transparent comprend un dioptre d'entrée et un dioptre de sortie. La réflexion du faisceau lumineux sur chacun des dioptres créée deux images virtuelles : une image utile obtenue par réflexion sur le dioptre d'entrée et une image parasite obtenue par réflexion sur le dioptre de sortie. L'image parasite, aussi appelée « ghost » (de l'anglais traduit en français par « fantôme ») vient affecter la visibilité de l'image utile.

Pour limiter l'impact de l'image parasite et rehausser la luminosité de l'image utile, il est connu d'appliquer un traitement semi-réfléchissant sur le dioptre d'entrée de sorte à augmenter la réflexion sur ce dioptre et diminuer, ainsi, la quantité de lumière transmise vers le dioptre de sortie. Un traitement antireflet peut, en outre, être appliqué sur le dioptre de sortie pour limiter les reflets sur celui-ci. Une telle technique n'est cependant pas applicable lorsque le support transparent est un parebrise. En effet, un traitement antireflet appliqué sur la face extérieure d'un parebrise ne serait pas résistant aux conditions environnementales (intempéries, rayonnement solaire, balaie d'essuie-glace).

Une autre déclinaison connue consiste, à la place du traitement antireflet, à teinter le support transparent de sorte à absorber la lumière transmise vers le dioptre de sortie. Néanmoins, pour des raisons légales, cette technique n'est pas applicable lorsque le support transparent est un parebrise.

Une autre solution très répandue consiste à créer un prisme (en anglais « wedge ») au niveau de la structure du support transparent. Cet effet prismatique permet de superposer la réflexion créée par le dioptre d'entrée à la réflexion créée par le dioptre de sortie. Toutefois, dans le cas des parebrises, la combinaison parebrise (angle d'inclinaison, courbure) et dispositif d'affichage tête haute impose de fabriquer un parebrise spécifique pour chaque modèle de véhicule. La fabrication du parebrise est donc complexifiée.

Les documents FR2652936, DE2450704 et FR3079314 illustre des dispositifs d'affichage tête haute connus.

Il existe donc un besoin pour un dispositif d'affichage tête haute permettant de limiter l'effet fantôme (« ghost ») relatif à l'image parasite sans complexifier la fabrication du support transparent, et qui soit compatible avec tous types de supports transparents, y compris le pare-brise d'un véhicule.

A cet effet, la présente description a pour objet un dispositif d'affichage tête haute comprenant :
- un support transparent comprenant un dioptre d'entrée et un dioptre de sortie, chaque dioptre ayant une face externe et une face interne opposée à la face externe,
- un élément réflecteur disposé sur au moins une partie de la face externe du dioptre d'entrée,
- une source de projection d'informations propre à émettre, en direction de l'élément réflecteur, un faisceau lumineux polarisé selon une polarisation principale, dit faisceau incident, le faisceau incident arrivant sur l'élément réflecteur avec un angle d'incidence et définissant avec l'élément réflecteur un plan d'incidence, la polarisation principale étant une polarisation contenue dans le plan d'incidence, dite polarisation P,
   l'élément réflecteur ayant une plus grande réflectivité, sur une gamme d'angles d'incidence comprenant l'angle d'incidence, pour une lumière de polarisation P que pour une lumière de polarisation rectiligne perpendiculaire au plan d'incidence, dite polarisation S.

Selon d'autres aspects avantageux, le dispositif comprend une ou plusieurs des caractéristiques suivantes, prises isolément ou suivant toutes les combinaisons techniquement possibles :
- l'élément réflecteur a une plus grande réflectivité, sur la gamme d'angles d'incidence, pour une lumière de polarisation P que pour une lumière de polarisation différente ;
- la réflectivité de l'élément réflecteur pour une lumière de polarisation P, sur la gamme d'angles d'incidence, est supérieure ou égale à 10 pourcents, de préférence supérieure ou égale à 15 pourcents, avantageusement supérieure ou égale à 20 pourcents, encore plus avantageusement supérieure ou égale à 40 pourcents ;
- la réflectivité de l'élément réflecteur pour une lumière de polarisation différente d'une polarisation P, sur la gamme d'angles d'incidence, est inférieure ou égale à 10 pourcents, de préférence inférieure ou égale à 5 pourcents ;
- la gamme d'angles d'incidence s'étend sur au moins 20 degrés, de préférence au moins 40 degrés, avantageusement au moins 60 degrés ;
- la gamme d'angles d'incidence comprend un angle de Brewster relatif au dioptre d'entrée ;
- la source de projection d'informations est configurée pour émettre le faisceau incident avec un angle d'incidence choisi de sorte que la portion du faisceau incident transmis par l'élément réflecteur arrive sur le dioptre de sortie avec un angle sensiblement égal à l'angle de Brewster relatif au dioptre de sortie ;
- l'élément réflecteur comprend un empilement de couches diélectriques ;
- le support transparent est un pare-brise d'un véhicule, l'élément réflecteur étant avantageusement disposé sur toute la face externe du dioptre d'entrée.

La présente description concerne aussi un véhicule comprenant un dispositif d'affichage tête haute tel que décrit précédemment.

D'autres caractéristiques et avantages de l'invention apparaîtront à la lecture de la description qui suit de modes de réalisation de l'invention, donnée à titre d'exemple uniquement, et en référence aux dessins qui sont :
- [Fig 1] figure 1, une représentation schématique d'un exemple d'un dispositif d'affichage tête haute, et
- [Fig 2] figure 2, une représentation schématique vue en perspective d'un exemple de l'intérieur d'un véhicule comprenant le dispositif d'affichage tête haute de la figure 1.

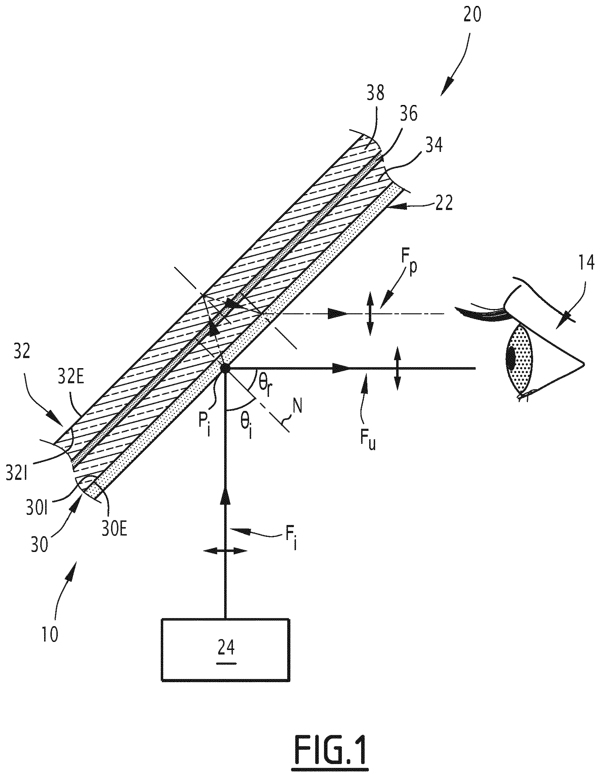

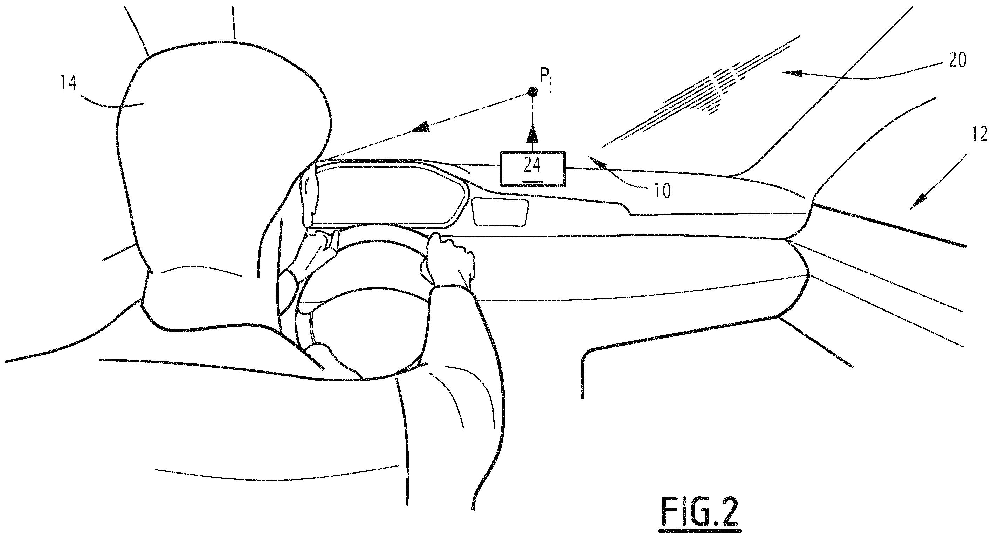

Un dispositif 10 d'affichage tête haute est illustré par les figures 1 et 2.

Comme illustré par la figure 2, le dispositif 10 est adapté à être intégré dans un véhicule 12. Le véhicule est, par exemple, un véhicule terrestre, aérien ou naval. Le véhicule terrestre est, par exemple, un véhicule automobile (figure 2) ou un véhicule ferroviaire.

Le dispositif 10 est propre à afficher des informations dans le champ de vision du conducteur 14 du véhicule 12. Les informations sont, par exemple, fournies par des instruments de bord du véhicule 12. A titre d'exemple, les informations sont relatives à un indicateur de vitesse du véhicule 12, à la consommation en énergie du véhicule 12, à des alarmes relatives au dysfonctionnement de certains composants du véhicule 12 ou encore à des informations de navigation (cartographie, positions, directions).

Le dispositif 10 comprend un support transparent 20, un élément réflecteur 22 et une source de projection d'informations 24.

Le support transparent 20 comprend un dioptre d'entrée 30 et un dioptre de sortie 32. Le dioptre d'entrée 30 à une face externe 30E et une face interne 30I opposée à la face externe 30E. Le dioptre de sortie 32 a une face externe 32E et une face interne 32I opposée à la face externe 32E. La face externe 30E, 32E de chaque dioptre 30, 32 est une face orientée vers l'extérieur dudit dioptre 30, 32, c'est-à-dire en direction du milieu extérieur (l'air). La face interne 30I, 32I de chaque dioptre 30, 32 est orientée vers l'intérieur dudit dioptre 30, 32.

Le support transparent 20 comprend au moins une couche d'un matériau transparent entre le dioptre d'entrée 30 et le dioptre de sortie 32. Le matériau transparent est, par exemple, le verre ou le plastique.

Dans un exemple de mise en oeuvre, le support transparent 20 comprend plusieurs couches de matériaux transparents, éventuellement différents, entre le dioptre d'entrée 30 et le dioptre de sortie 32. Les matériaux desdites couches sont, par exemple, le verre, l'éthylène vinyle acétate (EVA), ou encore le polyvinyle butyrale (PVB).

Notamment, dans l'exemple illustré par la figure 1, le support transparent 20 comprend une première couche 34 de verre, une deuxième couche 36 de PVB et une troisième couche 38 de verre. Dans cet exemple, il est considéré que les indices des matériaux des différentes couches sont sensiblement identiques, et n'induisent pas de réflexions parasites additionnelles aux interfaces.

Le support transparent 20 est, par exemple, une lame aussi appelée « combineur » (en anglais « combiner »). En variante, le support transparent 20 est un parebrise, tel que le parebrise du véhicule 12 dans lequel est intégré le dispositif 10.

L'élément réflecteur 22, aussi appelé polariseur réflectif, est un élément disposé sur au moins une partie de la face externe 30E du dioptre d'entrée 30. Par le terme « disposé », il est entendu que l'élément réflecteur 22 est appliqué (donc en contact) sur la face externe 30E du dioptre d'entrée 30, et adhère à cette face (éventuellement par un moyen de fixation). L'élément réflecteur 22 est, ainsi, solidaire de la face externe 30E du dioptre d'entrée 30. L'élément réflecteur 22 est, par exemple, un revêtement ou traitement (par exemple obtenu par dépôt physique ou dépôt chimique) ou un film (par exemple laminé ou maintenu par effet électrostatique).

Lorsque le support transparent 20 est un pare-brise d'un véhicule, l'élément réflecteur 22 est avantageusement disposé sur toute la face externe 30E du dioptre d'entrée 30. Cela permet de rendre l'élément réflecteur 22 invisible pour l'utilisateur (pas d'effet patch).

L'élément réflecteur 22 est un élément propre à réfléchir un faisceau lumineux incident F_{I} ayant une gamme donnée de longueurs d'onde, en fonction de l'angle d'incidence Θᵢ du faisceau incident F_{I} sur l'élément réflecteur 22 et de la polarisation dudit faisceau incident F_{I}.

La gamme donnée de longueurs d'onde du faisceau incident F_{I} appartient, par exemple, au domaine visible (380 nanomètres à 700 nanomètres).

L'angle d'incidence Θᵢ du faisceau incident F_{I} est l'angle entre l'axe du faisceau et la normale N à l'élément réflecteur 22 au point d'incidence P_{I} du faisceau incident F_{I} sur l'élément réflecteur 22. L'axe du faisceau incident F_{I} et la normale N à l'élément réflecteur 22 au point d'incidence P_{I} définissent un plan d'incidence. Dans l'exemple illustré par la figure 1, le plan d'incidence est le plan de la figure. Notamment, l'élément réflecteur 22 est propre à, d'une part, réfléchir au moins une partie du faisceau incident F_{I} pour former une image virtuelle utile observable depuis une fenêtre d'observation (correspondant à un faisceau utile F_{U}) et à, d'autre part, transmettre au moins une autre partie du faisceau incident F_{I} vers le dioptre de sortie 32. Le dioptre de sortie 32 est, le cas échéant, propre à réfléchir une partie du faisceau transmis par l'élément réflecteur 22 pour former une image virtuelle parasite observable depuis la fenêtre d'observation (correspondant à un faisceau parasite F_{P}).

Dans ce qui suit, une polarisation rectiligne contenue dans le plan d'incidence est aussi appelée polarisation P, et une polarisation rectiligne perpendiculaire au plan d'incidence est aussi appelée polarisation S.

L'élément réflecteur 22 est optimisé pour réfléchir une lumière de polarisation P. L'élément réflecteur 22 a, ainsi, une réflectivité plus grande, sur une gamme d'angles d'incidence et sur la gamme de longueurs d'onde donnée, pour une lumière de polarisation P que pour une lumière de polarisation différente (polarisation S, circulaire, elliptique).

Avantageusement, la réflectivité de l'élément réflecteur 22 pour une lumière de polarisation P, sur la gamme d'angles d'incidence et sur la gamme de longueurs d'onde donnée, est choisie de sorte à être compatible avec les critères de transparence imposés aux parebrises de véhicules automobiles (pour que l'élément réflecteur 22 reste transparent et n'altère pas la perception du conducteur), tout en étant suffisamment élevée pour que l'effet « ghost » soit négligeable. A cet effet, l'élément réflecteur 22 est, par exemple, tel que le rapport signal sur bruit entre le faisceau utile et le faisceau parasite est inférieur ou égal à 3 pourcents, de préférence inférieur ou égal à 1 pourcent, avantageusement inférieur ou égal à 0,5 pourcents.

De préférence, la réflectivité de l'élément réflecteur 22 pour une lumière de polarisation P, sur la gamme d'angles d'incidence et sur la gamme de longueurs d'onde donnée, est supérieure ou égale à 10 pourcents, de préférence supérieure ou égale à 15 pourcents, avantageusement supérieure ou égale à 20 pourcents, avantageusement supérieure ou égale à 40 pourcents.

Avantageusement, la réflectivité de l'élément réflecteur 22 pour une lumière de polarisation différente d'une polarisation P, sur la gamme d'angles d'incidence et sur la gamme de longueurs d'onde donnée, est inférieure ou égale à 10 pourcents, de préférence inférieure ou égale à 5 pourcents.

Avantageusement, la gamme d'angles d'incidence s'étend sur au moins 20 degrés, de préférence au moins 40 degrés, avantageusement au moins 60 degrés.

De préférence, la gamme d'angles d'incidence Θᵢ comprend l'angle de Brewster entre le milieu extérieur (air) et le support transparent au dioptre d'entrée (typiquement de 56° pour une interface air-verre). L'élément réflecteur 22 est en effet configuré pour rendre inexistant l'effet de l'angle de Brewster, c'est-à-dire que la polarisation P ne s'annule pas à l'angle de Brewster. Il est rappelé que l'angle de Brewster est l'angle d'incidence d'un faisceau incident sur un dioptre pour lequel le faisceau n'est pas réfléchi sur ce dioptre s'il est de polarisation P.

L'élément réflecteur 22 comprend, par exemple, un empilement de couches diélectriques.

L'élément réflecteur 22 est, par exemple, un polariseur ayant une réflectivité spécifique pour la lumière polarisée P, tel que décrit dans la demande de brevet WO 96/19347 A.

Notamment, l'élément réflecteur 22 comprend, par exemple, un film polymère multicouches comprenant des couches d'un polyester d'acide naphtalène dicarboxylique cristallin ou semi-cristallin, par exemple un 2,6-polyéthylène naphtalate ("PEN") ou un copolymère dérivé d'éthylène glycol, de naphtalène l'acide dicarboxylique et certains autres acides tels que le téréphtalate ("co-PEN"), avec un coefficient optique de contrainte positif, c'est-à-dire lors de l'étirement, son indice de réfraction dans la direction d'étirement augmente, ayant une épaisseur moyenne de pas de plus de 0,5 micron; et des couches d'un second polymère sélectionné, par exemple un polyéthylène téréphtalate ("PET") ou un co-PEN, ayant une épaisseur moyenne ne dépassant pas 0,5 micron.

Dans un autre exemple, l'élément réflecteur 22 comprend un film polymère multicouches comprenant des couches d'un polyester cristallin ou semi-cristallin, par exemple un PET, ayant une épaisseur moyenne de pas plus de 0,5 micron; et des couches d'un second polymère sélectionné, par exemple un polyester ou un polystyrène, ayant une épaisseur moyenne de pas plus de 0,5 micron; dans lequel ledit film a été étiré dans au moins une direction jusqu'à au moins deux fois la dimension non étirée de cette direction.

Dans un exemple de mise en oeuvre, l'élément réflecteur 22 présente également au moins un revêtement conférant des propriété optiques et/ou mécaniques additionnelles. Le revêtement est, par exemple, une protection thermique, un traitement colorimétrique neutralisant ou encore un revêtement anti-rayures ou antibuée.

En complément ou en variante, l'élément réflecteur 22 est configuré de sorte à, sur la gamme d'angles d'incidence, réfléchir chacune d'une lumière polarisée P et d'une lumière polarisée S avec une forte réflectivité (typiquement supérieure ou égale à 50%) dans la gamme infrarouge (au moins infrarouge proche : 700 µm à 1 µm). Cela permet notamment de rejeter davantage de rayonnement solaire.

La source de projection d'informations 24 est propre à émettre un faisceau lumineux incident sur l'élément réflecteur 22. Le faisceau incident F_{I} transporte des informations qui sont, par exemple, telles que décrites précédemment.

Le faisceau incident F_{I} émis par la source de projection d'informations 24 est un faisceau polarisé selon une polarisation spécifique, dite polarisation principale.

La polarisation principale est une polarisation rectiligne contenue dans le plan d'incidence, dite polarisation P. La polarisation principale est ainsi différente d'une polarisation S, d'une polarisation circulaire ou d'une polarisation elliptique.

Les longueurs d'onde du faisceau incident F_{I} sont dans la gamme de longueurs d'onde donnée pour l'élément réflecteur 22, typiquement dans le visible.

La source de projection d'informations 24 est configurée de sorte que le faisceau incident F_{I} arrive sur l'élément réflecteur 22 avec un angle d'incidence Θᵢ compris dans la gamme d'angles d'incidence définie précédemment pour l'élément réflecteur 22.

Avantageusement, la source de projection d'informations 24 est configurée pour envoyer le faisceau incident F_{I} sur l'élément réflecteur 22 avec un angle d'incidence Θᵢ tel que le faisceau transmis par l'élément réflecteur 22 arrive sur le dioptre de sortie 32 avec un angle sensiblement égal à l'angle de Brewster entre le milieu du support transparent 20 et le milieu extérieur (air) (typiquement de 33° pour une interface verre-air), ou dans une gamme d'angle s'étendant sur 10 degrés autour dudit angle de Brewster. Le faisceau incident étant de polarisation P, cela permet de supprimer complétement la réflexion parasite sur le dioptre de sortie 32.

Le fonctionnement du dispositif 10 d'affichage tête haute va maintenant être décrit.

Initialement, la source de projection d'informations 24 envoie un faisceau lumineux incident polarisé selon la polarisation principale en direction de l'élément réflecteur 22. Le faisceau incident F_{I} est dans la gamme de longueurs d'onde donnée, typiquement dans le visible. Le faisceau incident F_{I} arrive sur l'élément réflecteur 22 avec un angle d'incidence Θᵢ par rapport à une normale N à l'élément réflecteur 22 au point d'incidence P_{I}.

L'élément réflecteur 22 réfléchit alors au moins une partie du faisceau incident F_{I} pour former une image virtuelle utile observable depuis une fenêtre d'observation. Le faisceau incident F_{I} étant de polarisation P et l'angle d'incidence Θᵢ du faisceau sur l'élément réflecteur 22 étant compris dans la gamme d'angles d'incidence, la quantité de faisceau incident F_{I} réfléchi est maximisée par rapport à un faisceau incident F_{I} de polarisation S, et plus généralement de polarisation différente de P.

L'élément réflecteur 22 transmet aussi au moins une autre partie du faisceau incident F_{I} vers le dioptre de sortie 32.

En fonction de l'angle d'incidence Θᵢ, le dioptre de sortie 32 réfléchit ou non une partie du faisceau, transmis par l'élément réflecteur 22 et le dioptre d'entrée 30, pour former une image virtuelle parasite observable depuis la fenêtre d'observation.

Lorsque tel est le cas, la quantité de lumière réfléchie sur le dioptre de sortie 32 est toutefois relativement faible. Par exemple, pour une polarisation principale de type P, la quantité de lumière réfléchie sur le dioptre de sortie 32 est typiquement de l'ordre de 1 à 2 pourcents pour un angle d'incidence Θᵢ de 65 degrés. Par contre, si la polarisation principale était de type S, la quantité de lumière réfléchie sur le dioptre de sortie 32 serait plutôt de l'ordre de 20 pourcents pour un angle d'incidence Θᵢ de 65 degrés.

En outre, pour un angle d'incidence choisi de sorte que le faisceau transmis par l'élément réflecteur 22 arrive sur le dioptre de sortie 32 avec un angle sensiblement égal à l'angle de Brewster entre le milieu du support transparent 20 et le milieu extérieur (air), la quantité de lumière réfléchie sur le dioptre de sortie 32 est nulle ou quasi nulle (pas de réflexion parasite).

Ainsi, le dispositif 10 d'affichage tête-haute permet de superposer des informations utiles à la conduite dans le champ de vision d'un conducteur.

La combinaison d'un élément réflecteur 22, optimisé pour réfléchir une lumière de polarisation P, et d'une source de projection d'informations 24 émettant un faisceau lumineux polarisé selon une polarisation P, permet d'augmenter la quantité de lumière utile réfléchie par rapport à la quantité de lumière parasite réfléchie.

En particulier, pour une polarisation P, le pourcentage de lumière parasite réfléchie est faible par rapport au pourcentage de lumière utile réfléchie, ce qui rend l'effet de « ghost » relativement négligeable. De plus, pour des angles d'incidence Θᵢ choisis spécifiquement, le pourcentage de lumière parasite réfléchie est quasi nul, voir nul.

Une polarisation P présente, en outre, l'avantage d'être compatible avec les verres solaires polarisés. De tels verres sont en effet classiquement configurés pour transmettre seulement la lumière polarisée P, et rejeter les autres types de polarisations.

De plus, l'ajout d'un élément réflecteur 22 sur le support transparent 20 est simple à mettre en oeuvre puisque cela n'implique pas de modifier la structure du support 20, ni la ou les couches internes du support 20. L'élément réflecteur 22 a notamment la même configuration quelle que soit la structure du support transparent 20 (angle d'inclinaison, courbure), ce qui n'est pas le cas des solutions à prisme (wedge) de l'état de la technique. Ainsi, la fabrication du support transparent 20 n'est pas complexifiée et le dispositif 10 est adaptable à tous types de supports transparents, aussi bien des combineurs que des parebrises.

L'homme du métier comprendra que les modes de réalisation décrits précédemment sont susceptibles d'être combinés entre eux lorsque de telles combinaisons sont compatibles.

Les modes de réalisation décrits sont également adaptables avec une structure prismatique. Dans ce complément, le dioptre de sortie 32 est incliné par rapport au dioptre d'entrée 30 (« wedge ») de sorte à superposer l'image virtuelle parasite à l'image virtuelle utile. Un tel complément permet de limiter encore l'effet de « ghost » car l'image parasite déjà fortement atténuée par la configuration spécifique du dispositif 10 et en outre superposée à l'image utile.

## Revendications

1. Dispositif (10) d'affichage tête haute comprenant :
a. un support transparent (20) comprenant un dioptre d'entrée (30) et un dioptre de sortie (32), chaque dioptre (30, 32) ayant une face externe (30E, 32E) et une face interne (30I, 32I) opposée à la face externe (30E, 32E),
b. un élément réflecteur (22) disposé sur au moins une partie de la face externe (30E) du dioptre d'entrée (30),
c. une source de projection d'informations (24) propre à émettre, en direction de l'élément réflecteur (22), un faisceau lumineux polarisé selon une polarisation principale, dit faisceau incident (F_{I}), le faisceau incident (F_{I}) arrivant sur l'élément réflecteur (22) avec un angle d'incidence (Θᵢ) et définissant avec l'élément réflecteur (22) un plan d'incidence, la polarisation principale étant une polarisation contenue dans le plan d'incidence, dite polarisation P,
l'élément réflecteur (22) ayant une plus grande réflectivité, sur une gamme d'angles d'incidence comprenant l'angle d'incidence (Θᵢ), pour une lumière de polarisation P que pour une lumière de polarisation rectiligne perpendiculaire au plan d'incidence, dite polarisation S.

2. Dispositif (10) selon la revendication 1, dans lequel l'élément réflecteur (22) a une plus grande réflectivité, sur la gamme d'angles d'incidence, pour une lumière de polarisation P que pour une lumière de polarisation différente.

3. Dispositif (10) selon la revendication 1 ou 2, dans lequel la réflectivité de l'élément réflecteur (22) pour une lumière de polarisation P, sur la gamme d'angles d'incidence, est supérieure ou égale à 10 pourcents, de préférence supérieure ou égale à 15 pourcents, avantageusement supérieure ou égale à 20 pourcents, encore plus avantageusement supérieure ou égale à 40 pourcents.

4. Dispositif (10) selon l'une quelconque des revendications 1 à 3, dans lequel la réflectivité de l'élément réflecteur (22) pour une lumière de polarisation différente d'une polarisation P, sur la gamme d'angles d'incidence, est inférieure ou égale à 10 pourcents, de préférence inférieure ou égale à 5 pourcents.

5. Dispositif (10) selon l'une quelconque des revendications 1 à 4, dans lequel la gamme d'angles d'incidence s'étend sur au moins 20 degrés, de préférence au moins 40 degrés, avantageusement au moins 60 degrés.

6. Dispositif (10) selon l'une quelconque des revendications 1 à 5, dans lequel la gamme d'angles d'incidence comprend un angle de Brewster relatif au dioptre d'entrée (30).

7. Dispositif (10) selon l'une quelconque des revendications 1 à 6, dans lequel la source de projection d'informations (24) est configurée pour émettre le faisceau incident (F_{I}) avec un angle d'incidence (Θᵢ) choisi de sorte que la portion du faisceau incident transmis par l'élément réflecteur (22) arrive sur le dioptre de sortie (32) avec un angle sensiblement égal à l'angle de Brewster relatif au dioptre de sortie (32).

8. Dispositif (10) selon l'une quelconque des revendications 1 à 7, dans lequel l'élément réflecteur (22) comprend un empilement de couches diélectriques.

9. Dispositif (10) selon l'une quelconque des revendications 1 à 8, dans lequel le support transparent (20) est un pare-brise d'un véhicule, l'élément réflecteur (22) étant avantageusement disposé sur toute la face externe (30E) du dioptre d'entrée (30).

10. Véhicule (12) comprenant un dispositif (10) d'affichage selon l'une quelconque des revendication 1 à 9.

## Patentansprüche

1. Head-up-Anzeigevorrichtung (10), umfassend:
a. einen transparenten Träger (20), umfassend ein Eingangsdiopter (30) und ein Ausgangsdiopter (32), wobei jedes Diopter (30, 32) eine Außenseite (30E, 32E) und eine Außenseite (30E, 32E) gegenüber der Innenseite (30I, 32I) aufweist,
b. ein reflektierendes Element (22), das auf mindestens einem Teil der Außenseite (30E) des Eingangsdiopters (30) angeordnet ist,
c. eine Informationsprojektionsquelle (24), die geeignet ist, um in Richtung des reflektierenden Elements (22) einen gemäß einer Hauptpolarisation polarisierten Lichtstrahl, den sogenannten einfallenden Strahl (F_{I}), zu emittieren, wobei der einfallende Strahl (F_{I}) auf das reflektierende Element (22) mit einem Einfallswinkel (Θᵢ) auftrifft und mit dem reflektierenden Element (22) eine Einfallsebene definiert, wobei die Hauptpolarisation eine in der Einfallsebene enthaltene Polarisation ist, die sogenannte P-Polarisation,
wobei das reflektierende Element (22) über einen Bereich von Einfallswinkeln, der den Einfallswinkel (Θᵢ) umfasst, ein höheres Reflexionsvermögen für P-polarisiertes Licht als für Licht mit einer geradlinigen Polarisation senkrecht zu der Einfallsebene, der sogenannten S-Polarisation, aufweist.

2. Vorrichtung (10) nach Anspruch 1, wobei das reflektierende Element (22) über den Einfallswinkelbereich für Licht mit P-Polarisation ein höheres Reflexionsvermögen aufweist als für Licht mit einer anderen Polarisation.

3. Vorrichtung (10) nach Anspruch 1 oder 2, wobei das Reflexionsvermögen des reflektierenden Elements (22) für Licht mit der Polarisation P über den Bereich der Einfallswinkel größer als oder gleich wie 10 Prozent, vorzugsweise größer als oder gleich wie 15 Prozent, vorteilhafterweise größer als oder gleich wie 20 Prozent, noch vorteilhafter größer als oder gleich wie 40 Prozent ist.

4. Vorrichtung (10) nach einem der Ansprüche 1 bis 3, wobei das Reflexionsvermögen des Reflektorelements (22) für Licht mit einer anderen Polarisation als P über den Bereich der Einfallswinkel kleiner als oder gleich wie 10 Prozent, vorzugsweise kleiner als oder gleich wie 5 Prozent, ist.

5. Vorrichtung (10) nach einem der Ansprüche 1 bis 4, wobei sich der Bereich der Einfallswinkel über mindestens 20 Grad, vorzugsweise mindestens 40 Grad, vorteilhafterweise mindestens 60 Grad erstreckt.

6. Vorrichtung (10) nach einem der Ansprüche 1 bis 5, wobei der Bereich der Einfallswinkel einen Brewster-Winkel in Bezug auf das Eingangsdiopter (30) umfasst.

7. Vorrichtung (10) nach einem der Ansprüche 1 bis 6, wobei die Informationsprojektionsquelle (24) konfiguriert ist, um den einfallenden Strahl (F_{I}) mit einem Einfallswinkel (Θᵢ) zu emittieren, der gewählt ist, sodass der durch das reflektierende Element (22) transmittierte Teil des einfallenden Strahls auf das Ausgangsdiopter (32) mit einem Winkel auftrifft, der im Wesentlichen gleich wie der Brewster-Winkel in Bezug auf das Ausgangsdiopter (32) ist.

8. Vorrichtung (10) nach einem der Ansprüche 1 bis 7, wobei das reflektierende Element (22) einen Stapel von dielektrischen Schichten umfasst.

9. Vorrichtung (10) nach einem der Ansprüche 1 bis 8, wobei der transparente Träger (20) eine Windschutzscheibe eines Fahrzeugs ist, wobei das reflektierende Element (22) vorteilhafterweise auf der gesamten Außenseite (30E) des Eingangsdiopters (30) angeordnet ist.

10. Fahrzeug (12), umfassend eine Anzeigevorrichtung (10) nach einem der Ansprüche 1 bis 9.

## Claims

1. A head-up display device (10) comprising:
a. a transparent support (20) comprising an input optical interface (30) and an output optical interface (32), each optical interface (30, 32) having an external face (30E, 32E) and an internal face (30I, 32I) opposite the external face (30E, 32E),
b. a reflector element (22) arranged on at least a part of the external face (30E) of the input optical interface (30),
c. an information projection source (24) able to emit, towards the reflector element (22), a light beam polarized along a main polarization, called incident beam (F_{I}), the incident beam (F_{I}) arriving on the reflector element (22) at an angle of incidence (Θᵢ) and defining with the reflector element (22), a plane of incidence, the main polarization being a polarization contained in the plane of incidence, called polarization P,
the reflector element (22) having a greater reflectivity, over a range of angles of incidence including the angle of incidence (Θᵢ), for light with polarization P than for light with rectilinear polarization perpendicular to the plane of incidence, called polarization S.

2. The device (10) according to claim 1, wherein the reflector element (22) has a greater reflectivity over the range of angles of incidence for light with polarization P than for light with a different polarization.

3. The device (10) according to claim 1 or 2, wherein the reflectivity of the reflector element (22) for light with polarization P, over the range of angles of incidence, is greater than or equal to 10 percent, preferentially greater than or equal to 15 percent, advantageously greater than or equal to 20 percent, even more advantageously greater than or equal to 40 percent.

4. The device (10) according to any of claims 1 to 3, wherein the reflectivity of the reflector element (22) for light with a polarization different from a polarization P over the range of angles of incidence, is less than or equal to 10 percent, preferentially less than or equal to 5 percent.

5. The device (10) according to any of claims 1 to 4, wherein the range of angles of incidence extends over at least 20 degrees, preferentially at least 40 degrees, preferentially at least 60 degrees.

6. The device (10) according to any of claims 1 to 5, wherein the range of angles of incidence comprises a Brewster angle with respect to the input optical interface (30).

7. The device (10) according to any of claims 1 to 6, wherein the information projection source (24) is configured for emitting the incident beam (F_{I}) with an angle of incidence (Θᵢ) chosen so that the portion of the incident beam transmitted by the reflector element (22) arrives on the output optical interface (32) at an angle substantially equal to the Brewster angle with respect to the output optical interface (32).

8. The device (10) according to any of claims 1 to 7, wherein the reflector element (22) comprises a stack of dielectric layers.

9. The device (10) according to any of claims 1 to 8, wherein the transparent support (20) is a windscreen of a vehicle, the reflector element (22) being advantageously arranged over the entire external face (30E) of the input optical interface (30).

10. A vehicle (12) comprising a head-up display device (10) according to any of claims 1 to 9.
